# FASCICULE DE BREVET EUROPEEN

(11) **EP 2 813 434 B1**
(45) Date de publication et mention de la délivrance du brevet: **18.05.2016**
(21) Numéro de dépôt: 14169910.8
(22) Date de dépôt: 26.05.2014
(51) Int. Cl.: B64G 1/36, B64G 7/00, G01C 21/02, G01C 25/00

(54) **Banc de test pour senseur stellaire, et procédé de test**
Prüfstand für Sternensensor, und entsprechendes Prüfverfahren
Test bench for star sensor, and test method

(30) Priorité: 10.06.2013 FR 1355343
(43) Date de publication de la demande: 17.12.2014
(73) Titulaire: CENTRE NATIONAL D'ETUDES SPATIALES, 75001 Paris (FR)
(72) Inventeur: Mignot, Jean, 31520 RAMONVILLE (FR); Martinez, Pierre Emmanuel, 31590 Lavalette (FR)
(74) Mandataire: Regimbeau

(56) Documents cités:
- FR-A1- 2 816 406
- KR-A- 20050 105 369
- US-A- 3 266 052
- US-A- 6 098 929
- US-A1- 2013 013 199
- WESSLING F C ET AL: "THE STAR FIELD SIMULATOR FOR THE SPACELAB INSTRUMENT POINTING SYSTEM FIXED HEAD STAR TRACKERS", PROCEEDINGS OF SPIE, S P I E - INTERNATIONAL SOCIETY FOR OPTICAL ENGINEERING, US, vol. 2221, 1 juillet 1994 (1994-07-01), pages 116-127, XP001014154, ISSN: 0277-786X, DOI: 10.1117/12.178926

## Description

### DOMAINE TECHNIQUE GENERAL

L'invention concerne un banc de test d'un senseur stellaire et un procédé de test.

### ETAT DE L'ART

Dans l'état de l'art, on connaît un banc de test au sol d'un senseur stellaire destiné à faire partie d'un système de contrôle d'attitude d'un satellite artificiel.

Un tel banc de test peut comprendre des moyens de génération et d'animation d'une portion de ciel représentative de celle observée par un senseur stellaire formant partie du système de contrôle d'attitude d'un satellite artificiel en orbite.

Dans un tel système, le senseur stellaire permet, à partir des positions d'étoiles présentes dans son champ de vision, de déterminer avec précision l'attitude du satellite et de calculer les corrections d'attitude à exécuter pour que le satellite rallie une attitude de consigne.

Le document FR 2816406, de la demanderesse, décrit un tel banc de test, qui comprend un écran affichant une portion défilante du ciel, projetée vers une surface sensible d'un senseur stellaire par des moyens optiques.

Un inconvénient de ce banc de test est qu'il nécessite de démonter le senseur stellaire pour le tester.

En outre, sa mise en oeuvre peut s'avérer complexe.

On connaît également une solution dans laquelle une unité optique est introduite dans le senseur stellaire, à proximité de la surface sensible du senseur stellaire. Cette unité optique comprend un micro-afficheur, simulant une portion du ciel, et une optique permettant de projeter cette simulation vers la surface sensible.

Cette solution présente plusieurs inconvénients.

Celle-ci est coûteuse, du fait du micro-afficheur notamment.

En outre, étant donné qu'une introduction de l'unité optique dans le senseur stellaire est nécessaire, une mauvaise manipulation risque d'endommager ledit senseur stellaire.

Enfin, l'introduction de l'unité optique dans le senseur stellaire est susceptible d'introduire des contaminants dans le senseur.

### PRESENTATION DE L'INVENTION

L'invention propose de pallier ces inconvénients.

A cet effet, l'invention propose un banc de test d'un senseur stellaire, caractérisé en ce qu'il comprend :
- un senseur stellaire comprenant un baffle de protection,
- un collimateur monté sur une extrémité du baffle de protection,
- un écran apte à afficher une portion défilante du ciel, l'écran étant disposé à distance de focalisation du collimateur de sorte à projeter vers une surface sensible du senseur stellaire une image collimatée de la portion défilante du ciel.

L'invention est avantageusement complétée par les caractéristiques suivantes, prises seules ou en une quelconque de leur combinaison techniquement possible :
- le banc comprend un cache amovible fixé sur l'extrémité du baffle et couvrant ladite extrémité, dans lequel le collimateur est intégré au cache et réalise la partie centrale dudit cache ;
- le cache comprend :
   ∘ des éléments de fixation au baffle,
   ∘ des supports du collimateur, et
   ∘ une ouverture centrale dans laquelle le collimateur est disposé par fixation aux supports.
- la surface de l'écran est réfléchissante, et le banc comprend en outre un projecteur de lumière orienté vers la surface de l'écran, permettant une projection d'une image vers la surface sensible du senseur stellaire par réflexion sur la surface de l'écran ;
- le banc de test comprend ou plusieurs sources lumineuses orientées vers la surface sensible du senseur stellaire, de sorte à l'éclairer ;
- l'écran est une tablette numérique commandée par micro-ordinateur par liaison sans fil.

L'invention concerne également un procédé de test mettant en oeuvre le banc de test.

Ce procédé de test peut comprendre l'étape consistant à consistant à projeter de l'écran vers la surface sensible du senseur stellaire une image d'étoile dont le barycentre correspond à une direction d'étoile recherchée.

L'invention présente de nombreux avantages.

Un avantage de l'invention est de permettre de tester le senseur stellaire en l'état, sans que celui-ci n'ait à être démonté.

En particulier, le senseur stellaire peut être testé sur le satellite lui-même. Cette phase de test est dénommée « AIT » (« *Assembly, Integration and Testing* ») par l'homme du métier.

Un autre avantage de l'invention est d'offrir une solution moins coûteuse et moins complexe que les solutions de l'art antérieur.

Enfin, un autre avantage de l'invention est de présenter une solution non-invasive et s'adaptant de manière flexible au senseur stellaire.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la Figure 1 est une représentation schématique d'un mode de réalisation d'un banc de test ;
- la Figure 2 est une représentation schématique d'un senseur stellaire pouvant être testé dans le banc de test ;

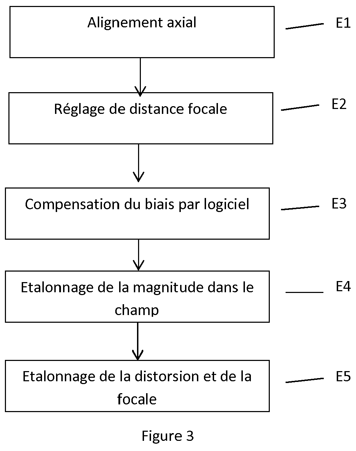

- la Figure 3 est une représentation schématique d'étapes d'alignement dans le procédé de test.

### DESCRIPTION DETAILLEE

### Banc de test

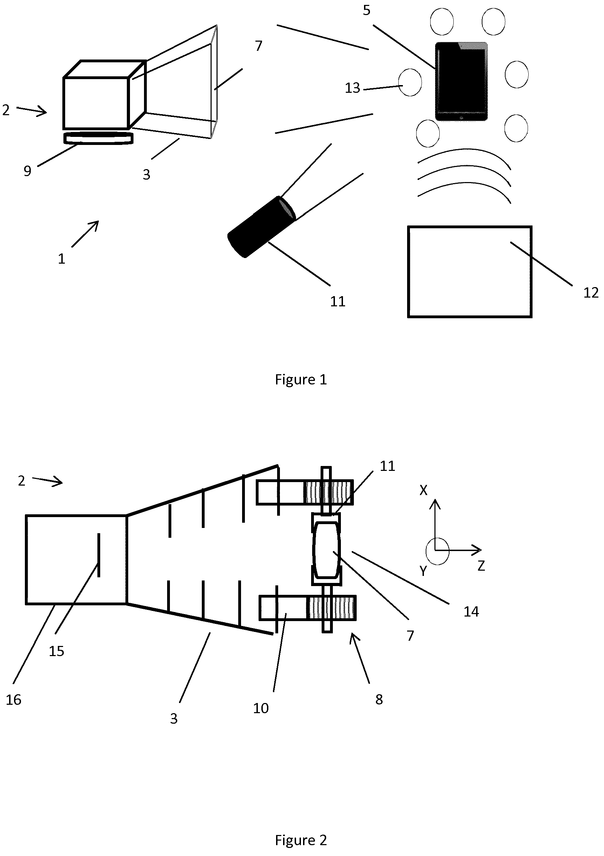

Comme illustré sur les Figures 1 et 2, le banc 1 de test est configuré pour permettre le test du senseur 2 stellaire.

Le banc 1 de test comprend de manière classique des éléments 9 de réception et de positionnement du senseur 2 stellaire. Ces éléments permettent de recevoir et de positionner le senseur 2 stellaire.

Il s'agit par exemple de platines motorisées permettant le déplacement du senseur selon les trois directions de l'espace.

Dans un mode de réalisation, le senseur 2 stellaire et son baffle 3 de protection décrit ci-après sont fixes.

Le senseur 2 stellaire comprend une surface 15 sensible (ou plusieurs surfaces) pour la prise d'images du ciel.

La surface 15 sensible est par exemple un capteur CCD ou APS. En analysant le champ d'étoile imagé et en le comparant à un catalogue d'étoiles embarqué, l'attitude d'un engin spatial peut-être déterminée par le senseur 2 stellaire ou par une unité de traitement en communication avec celui-ci.

La surface 15 sensible est située dans une tête optique 16 du senseur 2 stellaire.

Le senseur 2 stellaire à tester comprend un baffle 3 de protection, monté sur la tête 16 optique du senseur 2 stellaire comprenant la surface 15 sensible.

Le baffle 3 de protection est utilisé lorsque le senseur 2 stellaire est en vol, et sert notamment à protéger de la lumière parasite qui pourrait perturber les mesures effectuées par le senseur 2.

Le baffle 3 a typiquement une forme dont la section est croissante, par exemple une forme conique ou pyramidale.

Le banc 1 comprend en outre un collimateur 7 monté sur une extrémité du baffle 3 de protection. En particulier, le collimateur 7 est monté au niveau de l'extrémité distale du baffle 3, qui comprend l'ouverture de section la plus large.

Le collimateur 7 est par exemple une lentille optique.

Le banc 1 de test comprend également un écran 5 apte à afficher une portion défilante du ciel. La portion défilante comprend notamment une constellation d'étoiles que le senseur 2 est susceptible de rencontrer en vol.

L'affichage produit par l'écran 5 est commandé par une unité 12 de commande, de type micro-ordinateur.

L'écran peut notamment être déplacé selon différents axes de l'espace via des éléments de positionnement sur lequel l'écran est disposé.

L'écran 5 est disposé à distance de focalisation du collimateur 7, c'est-à-dire que la distance entre l'écran 5 et le collimateur 7 est égale à la distance focale du collimateur 7.

Lorsque l'écran 5 affiche une simulation d'une portion du ciel, l'image produite est projetée vers la surface sensible 15 du senseur stellaire après avoir rencontré le collimateur 7. En particulier, grâce au collimateur 7, une image collimatée (à l'infini) de la portion défilante du ciel est produite sur la surface 15 sensible, puisque le collimateur 7 rend parallèles les rayons incidents provenant de l'écran 5.

Comme on le comprend, le senseur 2 stellaire peut donc être testé tel quel, sans qu'il soit nécessaire de le démonter. En particulier, le baffle 3 de protection peut être maintenu sur le senseur 2 stellaire lors des opérations de test et l'intégration du satellite au sol.

Selon un mode de réalisation, un cache 8 amovible est fixé sur l'extrémité du baffle 3 et couvre ladite extrémité.

Ce cache 8 amovible permet de protéger le baffle 3 de protection.

Le collimateur 7 est intégré au cache et réalise la partie centrale dudit cache 8.

Ainsi, une fixation efficace et simple du collimateur 7 est assurée, qui tire profit de l'existence d'un cache 8 du baffle 3.

Le cache 8 comprend des éléments 10 de fixation au baffle 3. Il s'agit par exemple d'éléments mâles coopérant avec des éléments femelles du baffle 3. Par exemple, une fixation à vis et écrous peut être utilisée.

Le cache 8 comprend en outre des supports 11 du collimateur 7, et une ouverture 14 centrale dans laquelle le collimateur 7 est disposé par fixation aux supports 11.

Les supports 11 sont par exemple des éléments mécaniques enserrant les extrémités radiales du collimateur 7, permettant ainsi son maintien dans l'ouverture 14 centrale du cache 8.

Selon un autre mode de réalisation, le collimateur 7 est monté directement sur une extrémité du baffle 3 de protection par l'intermédiaire d'attaches, comme des bras mécanique ou autres.

L'écran 5 utilisé dans le banc 1 de test peut notamment être une tablette numérique. La taille de l'écran est par exemple choisie autour de 10 pouces en diagonale. La résolution de la tablette est par exemple, mais non limitativement, de 1024×768 pixels, ou 2048×1536 pixels, ou dans cette fourchette.

La tablette peut notamment être commandée par le micro-ordinateur 12 par liaison sans fil.

Il s'agit par exemple d'une tablette numérique de type IPad.

Dans un mode de réalisation, la surface de l'écran 5 est réfléchissante, et le banc 1 comprend en outre un projecteur 11 de lumière orienté vers la surface de l'écran 5, permettant une projection d'une image vers la surface 15 sensible du senseur 2 stellaire par réflexion sur la surface de l'écran 5.

Le projecteur 11 projette une lumière visible concentrée vers l'écran 5, qui se réfléchit à sa surface vers la surface 15 sensible du senseur 2 stellaire.

Cet éclairement indirect permet notamment de simuler, outre les étoiles simulées par l'écran 5, des variations de lumières parasites liées à la présence d'astres comme le Soleil à l'intérieur du cône d'exclusion du baffle 3.

Cette illumination par réflexion sur l'écran n'était pas possible dans l'art antérieur, car l'écran utilisé présente des propriétés de réflexion bien moins favorables. En outre, dans le cas où une unité optique est introduite dans le senseur stellaire, une telle illumination est difficilement réalisable sur le plan technique.

Les propriétés de réflexion de l'écran 5 se trouvent notamment dans des écrans de tablettes numériques.

Selon un autre mode de réalisation, qui peut le cas échéant être combiné au précédent, le banc 1 de test comprend, outre l'écran 5, une ou plusieurs sources 13 lumineuses orientées vers la surface 15 sensible du senseur 2 stellaire, de sorte à l'éclairer.

Il s'agit par exemple de fibres optiques ou de LEDs situées autour de l'écran 5.

Ces sources 13 lumineuses éclairent directement la surface 15 sensible du senseur 2 stellaire, après avoir rencontré le collimateur 7.

Ces sources 13 permettent également de simuler des points lumineux supplémentaires.

A nouveau, cette configuration n'était pas possible dans les montages de l'art antérieur. En particulier, dans FR 2816406, l'écran est grand et donc placé loin de la surface sensible ce qui rend difficile un éclairage direct par des sources ponctuelles. Dans le montage où une unité optique est introduite dans le senseur stellaire, il existe le risque d'endommager le senseur stellaire.

### Procédé de test

Un procédé de test du senseur 2 stellaire mettant en oeuvre le banc 1 de test comprend l'étape consistant à projeter de l'écran 5 vers la surface 15 sensible du senseur 2 stellaire une image à l'infini de la portion défilante du ciel.

La portion défilante est simulée par le micro-ordinateur 12 à partir de bases de données d'étoiles et de corps célestes.

La réponse du senseur 2 stellaire peut être enregistrée par le micro-ordinateur 12 et analysée. L'analyse peut notamment consister en une comparaison des mesures du senseur 2 stellaire avec les résultats attendus pour la portion défilante simulée par le banc.

Des tests similaires à ceux décrits dans le document FR 2816406, de la demanderesse, peuvent également être mis en oeuvre.

### Etapes d'alignement

Selon un aspect du procédé, des étapes d'alignement sont mises en oeuvre. Il s'agit notamment de corriger par voie logicielle le ciel affiché sur l'écran 5 pour compenser des désalignements mécaniques.

Le collimateur 7, l'écran 5 et le senseur 2 stellaire sont alignés (étape E1) selon l'axe du banc 1 de test (alignement selon l'axe Y).

Cet alignement peut notamment être réalisé manuellement ou par des éléments de positionnement commandés numériquement par une unité de commande. Ces éléments de positionnement peuvent comprendre des unités supportant chacune l'écran 5 et le senseur 2 stellaire, et aptes à se mouvoir selon différents axes.

Le collimateur 7 est aligné notamment grâce au positionnement du cache 8 dans lequel il est intégré. Ainsi, le positionnement du cache 8 permet de positionner automatiquement le collimateur 7 par rapport au senseur 2 stellaire. Alternativement, le collimateur 7 est aligné manuellement.

L'écran 5 est placé à distance focale du collimateur 7 (étape E2).

Selon un mode de réalisation, la phase d'étalonnage du banc comprend les étapes suivantes. Une mire d'étoiles est projetée sur l'écran 5. La réaction du senseur 2 stellaire est enregistrée.

Cet enregistrement permet de déterminer des biais d'alignement sur les trois axes X, Y et Z. Le micro-ordinateur 12 calcule un ou plusieurs biais dans l'image à afficher par l'écran 5 permettant de compenser les désalignements (étape E3).

Selon une autre étape, la représentativité de la magnitude des étoiles dans le champ de vue du senseur stellaire est vérifiée (étape E4).

Une mire d'étoile de magnitude constante est projetée dans le champ. Le micro-ordinateur 12 compare avec la magnitude observée par le senseur 2 stellaire, puis on modifie en conséquent la loi de passage magnitude/intensité de la tâche étoile.

On détermine ensuite la loi de passage de la direction angulaire souhaitée en entrée du senseur stellaire à la position de l'étoile en pixels de l'écran. Il s'agit d'un étalonnage de la distorsion optique et de son premier ordre qui est la distance focale (étape E5).

### Résolution inférieure au pixel

Le champ de vue d'un pixel (IFoV) sur l'écran 5 doit être comparable au champ de vue du senseur 2 stellaire (il peut éventuellement être plus petit).

En outre, le profil de l'étoile sur la surface 15 sensible du senseur stellaire se présente sur plusieurs pixels.

Etant donné que l'écran 5 est nécessairement pixélisé, il n'est pas possible de simuler une source ponctuelle comme une vraie étoile et de la positionner exactement dans la direction souhaitée.

Afin de simuler la position de l'étoile sans être limité par la résolution de l'écran (quelle que soit cette résolution), on recrée sur l'écran une tache sur plusieurs pixels dont le barycentre correspond à la direction souhaitée.

Ainsi, on projette de l'écran 5 vers la surface 15 sensible du senseur 2 stellaire une image d'étoile dont le barycentre correspond à une direction d'étoile recherchée.

Un calcul barycentrique permet donc d'obtenir une précision inférieure au pixel au niveau du senseur 2 stellaire, bien que l'écran 5 soit pixélisé. Cette détermination est par exemple de l'ordre du dixième de pixel.

## Revendications

1. Banc (1) de test d'un senseur stellaire, comprenant
- un senseur (2) stellaire,
- un collimateur (7) et
- un écran (5) apte à afficher une portion défilante du ciel, l'écran (5) étant disposé à distance de focalisation du collimateur (7), de sorte à projeter vers une surface (15) sensible du senseur (2) stellaire une image collimatée de la portion défilante du ciel,
**caractérisé en ce que**
- le senseur stellaire comprend un baffle (3) de protection et
- le collimateur est monté sur une extrémité du baffle (3) de protection.

2. Banc (1) de test selon la revendication 1, comprenant :
- un cache (8) amovible fixé sur l'extrémité du baffle (3) et couvrant ladite extrémité,
- le collimateur (7) étant intégré au cache et réalisant la partie centrale dudit cache (8).

3. Banc (1) de test selon la revendication 2, dans lequel le cache (8) comprend :
- des éléments (10) de fixation au baffle (3),
- des supports (11) du collimateur (7), et
- une ouverture centrale dans laquelle le collimateur (7) est disposé par fixation aux supports (11).

4. Banc (1) de test selon l'une des revendications 1 à 3, dans lequel :
- la surface de l'écran (5) est réfléchissante,
- le banc (1) comprend en outre un projecteur (11) de lumière orienté vers la surface de l'écran (5), permettant une projection d'une image vers la surface sensible (15) du senseur (2) stellaire par réflexion sur la surface de l'écran (5).

5. Banc (1) de test selon l'une des revendications 1 à 3, comprenant une ou plusieurs sources (13) lumineuses orientées vers la surface (15) sensible du senseur (2) stellaire, de sorte à l'éclairer.

6. Banc (1) de test selon l'une des revendications 1 à 5, dans lequel l'écran (5) est une tablette numérique commandée par micro-ordinateur par liaison sans fil.

7. Procédé de test d'un senseur stellaire (2) dans un banc (1) de test d'un senseur stellaire, comprenant :
- un senseur (2) stellaire comprenant
∘ un baffle (3) de protection, et
∘ un collimateur (7) monté sur une extrémité du baffle (3) de protection,
- un écran (5) disposé à distance de focalisation du collimateur (7), et affichant une portion défilante du ciel,
le procédé comprenant l'étape consistant à projeter de l'écran vers une surface (15) sensible du senseur (2) stellaire une image collimatée de la portion défilante du ciel.

8. Procédé de test selon la revendication 7, comprenant les étapes d'alignement consistant à :
- aligner axialement le collimateur (7), l'écran (5) et le senseur (2) stellaire,
- disposer l'écran (5) à distance focale du collimateur (7),
- compenser le désalignement par introduction d'un biais dans l'image affichée par l'écran (5).

9. Procédé de test selon l'une des revendications 7 ou 8, comprenant l'étape consistant à projeter de l'écran vers la surface (15) sensible du senseur (2) stellaire une image d'étoile dont le barycentre correspond à une direction d'étoile recherchée.

## Patentansprüche

1. Prüfstand (1 eines Sternsensors, umfassend
- einen Sternsensor (2)
- einen Kollimator (7) und
- einen Bildschirm (5), der geeignet ist, einen abrollenden Abschnitt des Himmels anzuzeigen, wobei der Bildschirm (5) in Fokalisationsentfernung des Kollimators (7) derart angeordnet ist, dass ein kollimatiertes Bild des abrollenden Abschnitts des Himmels zu einer sensiblen Oberfläche (15) des Sternsensors (2) projiziert wird,
**dadurch gekennzeichnet, dass**
- der Sternsensor einen Schutz-Baffle (3) umfasst und
- der Kollimator auf einem Ende des Schutz-Baffles (3) montiert ist.

2. Prüfstand (1) gemäß Anspruch 1, umfassend:
- eine abnehmbare Abdeckung (8), die auf dem Ende des Baffles (3) befestigt ist und das genannte Ende abdeckt,
- wobei der Kollimator (7) in die Abdeckung integriert ist und den zentralen Teil der genannten Abdeckung (8) realisiert.

3. Prüfstand (1) gemäß Anspruch 2, bei dem die Abdeckung (8) umfasst:
- Befestigungselemente (10) am Baffle (3),
- Träger (11) des Kollimators (7) und
- eine zentrale Öffnung, in der der Kollimator (7) per Befestigung an den Trägern (11) angeordnet ist.

4. Prüfstand (1) gemäß Anspruch 1 bis 3, bei dem:
- die Oberfläche des Bildschirms (5) reflektierend ist,
- der Prüfstand (1) darüber hinaus einen Lichtprojektor (11) umfasst, der zur Oberfläche des Bildschirms (5) ausgerichtet ist und ein Projizieren eines Bildes zur sensiblen Oberfläche (15) des Sternsensors (2) per Reflektieren auf der Oberfläche des Bildschirms (5) zulässt.

5. Prüfstand (1) gemäß Anspruch 1 bis 3, umfassend eine oder mehrere Lichtquelle(n) (13), die zur sensiblen Oberfläche (15) des Sternsensors (2) derart ausgerichtet sind, dass sie beleuchtet wird.

6. Prüfstand (1) gemäß Anspruch 1 bis 5, bei dem der Bildschirm (5) ein digitales Tablet ist, das vom Mikro-Computer per drahtloser Verbindung gesteuert wird.

7. Testverfahren eines Sternsensors (2) in einem Prüfstand eines Sternsensors, umfassend:
- einen Sternsensor (2), umfassend:
∘ einen Schutz-Baffle (3) und
∘ einen Kollimator (7), der auf einem Ende des Schutz-Baffles (3) montiert ist,
- einen Bildschirm (5), der in Fokalisationsentfernung des Kollimators (7) angeordnet ist und einen abrollenden Teil des Himmels anzeigt,
wobei das Verfahren die Stufe umfasst, bestehend in dem Projizieren eines kollimatierten Bildes des abrollenden Abschnitts des Himmels von dem Bildschirm zu einer sensiblen Oberfläche (15) des Sternsensors ().

8. Testverfahren gemäß Anspruch 7, umfassend die Fluchtungsstufen, bestehend in:
- axialem Fluchten des Kollimators (7), des Bildschirms (5) und des Sternsensors (2),
- Anordnen des Bildschirms (5) in fokaler Entfernung des Kollimators (7),
- Ausgleichen des Fluchtungsfehlers durch Einführen einer Neigung in dem vom Bildschirm (5) angezeigten Bild.

9. Testverfahren gemäß Anspruch 7 oder 8, umfassend die Stufe, bestehend in dem Projizieren eines Sternbildes, dessen Baryzentrum einer gewünschten Sternrichtung entspricht, von dem Bildschirm zur sensiblen Oberfläche (15) des Sternsensors (2).

## Claims

1. A test bench (1) for a stellar sensor, comprising:
- a stellar sensor (2),
- a collimator (7) and
- a screen (5) able to display a scrolling portion of the sky, the screen (5) being provided at a focusing distance from the collimator (7), so as to project towards a sensitive surface (15) of the stellar sensor (2) a collimated image of the scrolling portion of the sky,
**characterized in that**
- the stellar sensor comprises a protective baffle (3) and
- the collimator is mounted to one end of the protective baffle (3).

2. The test bench (1) according to claim 1, comprising:
- a removable cover (8) attached to the end of the baffle (3) and covering said end,
- the collimator (7) being integral with the cover and making the central part of said cover (8).

3. The test bench (1) according to claim 2, wherein the cover (8) comprises:
- elements (10) for fastening to the baffle (3),
- supports (11) for the collimator (7), and
- a centre opening in which the collimator (7) is provided by fastening to the supports (11).

4. The test bench (1) according to one of claims 1 to 3, wherein:
- the surface of the screen (5) is reflective,
- the bench (1) further comprises a light projector (11) facing the surface of the screen (5), for projecting an image towards the sensitive surface (15) of the stellar sensor (2) by reflection on the surface of the screen (5).

5. The test bench (1) according to one of claims 1 to 3, comprising one or more light sources (13) facing the sensitive surface (15) of the stellar sensor (2), so as to illuminate the same.

6. The test bench (1) according to one of claims 1 to 5, wherein the screen (5) is a wireless microcomputer controlled tablet computer.

7. A method for testing a stellar sensor (2) in a test bench (1) for a stellar sensor, comprising:
- a stellar sensor (2) comprising
o a protective baffle (3), and
o a collimator (7) mounted to one end of the protective baffle (3),
- a screen (5) provided at a focusing distance from the collimator (7), and displaying a scrolling portion of the sky,
the method comprising the step of projecting from the screen towards a sensitive surface (15) of the stellar sensor (2) a collimated image of the scrolling portion of the sky.

8. The testing method according to claim 7, comprising the aligning steps of:
- axially aligning the collimator (7), the screen (5) and the stellar sensor (2),
- providing the screen (5) at a focal distance from the collimator (7),
- compensating for the misalignment by introducing a bias in the image displayed by the screen (5).

9. The testing method according to one of claim 7 or 8, comprising the step of projecting from the screen to the sensitive surface (15) of the stellar sensor (2) an image of a star the barycenter of which corresponds to an intended star direction.
